# EUROPEAN PATENT SPECIFICATION

(11) **EP 4 290 665 B1**
(45) Date of publication and mention of the grant of the patent: **11.03.2026**
(21) Application number: 22898943.0
(22) Date of filing: 16.11.2022
(51) Int. Cl.: H01M 50/358, H01M 50/317, H01M 10/6556, H01M 10/6566, H01M 10/613, H01M 50/249, H01M 50/251

(54) **BATTERY PACK WITH IMPROVED SAFETY**
BATTERIEPACK MIT VERBESSERTER SICHERHEIT
BLOC-BATTERIE PRÉSENTANT UNE SÉCURITÉ AMÉLIORÉE

(30) Priority: 23.11.2021 KR 20210162812
(43) Date of publication of application: 13.12.2023
(73) Proprietor: LG Energy Solution, Ltd., Seoul 07335 (KR)
(72) Inventor: JO, Sang-Hyun, Daejeon 34122 (KR); KIM, Seung-Hyun, Daejeon 34122 (KR); OH, Young-Hoo, Daejeon 34122 (KR); OK, Seung-Min, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/018130
(87) International publication number: WO 2023/096261

(56) References cited:
- CN-U- 206 313 092
- CN-U- 206 313 092
- JP-A- 2011 258 426
- JP-A- 2011 258 426
- KR-A- 20090 000 307
- KR-A- 20210 055 364
- KR-A- 20210 122 559
- KR-A- 20210 122 559

## Description

### TECHNICAL FIELD

The present application claims priority to Korean Patent Application No. 10-2021-0162812 filed on November 23, 2021 in the Republic of Korea.

The present disclosure relates to a battery, and more particularly, to a battery pack in which safety may be improved even when an event such as thermal runaway occurs, and an energy storage system including the battery pack.

### BACKGROUND ART

As the demand for portable electronic products such as smartphones and smart pads has recently rapidly increased and the commercialization of robots, drones, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A secondary battery may be used alone, but in general, a plurality of secondary batteries are generally electrically connected to each other in series and/or in parallel in many cases. In particular, a plurality of secondary batteries may be electrically connected to each other and accommodated together in one module case to constitute one battery module. A battery module may be used alone, or two or more battery modules may be electrically connected to each other in series and/or in parallel to constitute a higher level device such as a battery pack. A battery module and a battery pack may be interchangeably used.

Recently, as issues such as power shortage or eco-friendly energy have emerged, an energy storage system (ESS) for storing produced power has attracted a lot of attention. Representatively, when such an ESS is used, a power management system such as a smart grid system may be easily constructed, and thus, power supply and demand may be easily controlled in a specific region or city. Also, as the commercialization of electric vehicles has begun in earnest, such an ESS may be applied to electric charging stations capable of charging electric vehicles.

A battery pack used in such an ESS or an electric vehicle may include a plurality of battery modules. The battery modules may be connected to each other in series and/or in parallel to increase the power or capacity of the battery pack. Moreover, in order to increase energy density of the battery pack, the battery modules may be densely located in a very narrow space.

However, when the plurality of battery modules are densely located in the narrow space, the battery modules may be very vulnerable to a thermal event. For example, when a thermal event such as thermal runaway occurs in a specific battery module, a lot of heat or high-temperature venting gas may be generated and released from the specific battery module. Also, due to the released heat or gas, propagation of thermal runaway to other battery modules may occur. When a chain reaction such as propagation of thermal runaway occurs, thermal control of the battery pack is very important because the chain reaction may lead to a fire or explosion of the battery pack.

A representative method for thermal control of a battery pack in the related art may include a method of preventing a temperature rise by supplying a cooling fluid into each battery module through a cooling duct. However, when a thermal event such as thermal runaway occurs in a specific battery module and venting gas is generated, the venting gas may be introduced into other battery modules through the cooling duct. Accordingly, in this case, propagation of thermal runaway may occur due to the venting gas, thereby aggravating a thermal event.

An example of a secondary battery pack with a backflow prevention device is described in JP 2011-258426 A. An example of a battery module with a gas barrier structure is described in KR 2021-0122559 A.

### DISCLOSURE

### Technical Problem

The present disclosure is designed to solve the problems of the related art, and therefore the present disclosure is directed to providing a battery pack in which a thermal event is effectively controlled to improve safety, and an energy storage system and a vehicle including the battery pack.

However, the technical purpose to be solved by the present disclosure is not limited to the above, and other objects not mentioned herein will be clearly understood by one of ordinary skill in the art from the following disclosure.

### Technical Solution

In one aspect of the present disclosure, there is provided a battery pack according to claim 1.

The intake portion may be formed on a side surface of each of the plurality of battery modules, and the exhaust portion may be formed on a top surface of each of the plurality of battery modules.

Also, the intake duct may cover a bus bar assembly of each of the plurality of battery modules.

Also, the intake duct may be configured to supply a cooling fluid to the plurality of battery modules, and the exhaust duct may be configured to discharge the cooling fluid supplied to the plurality of battery modules to an outside.

Also, the opening/closing member may be configured to, when the cooling fluid is supplied through the intake duct, open the intake portion.

Also, the opening/closing member may be configured to, when venting gas is generated in a battery module, close the intake portion.

Also, the opening/closing member may be pivotable around a hinge to open or close the intake portion.

In another aspect of the present disclosure, there is also provided an energy storage system including the battery pack according to the present disclosure.

In another aspect of the present disclosure, there is also provided a vehicle including the battery pack according to the present disclosure.

### Advantageous Effects

According to the present disclosure, in a battery pack including a plurality of battery modules, heat propagation between the battery modules may be effectively suppressed.

In particular, when heat or gas is generated in a specific battery module due to an event such as thermal runaway, the generated heat or gas may be more effectively prevented from being transferred to other modules through a cooling passage.

Accordingly, according to this aspect of the present disclosure, because a fire or explosion may be prevented from occurring through heat propagation between the battery modules, thermal safety of the battery pack may be further improved.

Also, according to an embodiment of the present disclosure, a cooling configuration of the battery pack is used and a separate space for exhaustion is not additionally required. Hence, according to this aspect, a structure of the battery pack may be simplified and energy density may be improved.

In addition, according to various embodiments of the present disclosure, various other additional effects may be achieved. The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating elements of a battery pack, according to an embodiment of the present disclosure.
FIG. 2 is an exploded perspective view illustrating some elements of FIG. 1.
FIG. 3 is a perspective view illustrating one battery module included in a battery pack, according to an embodiment of the present disclosure.
FIG. 4 is a partial perspective view illustrating a state where some elements of FIG. 3 are separated.
FIG. 5 is a schematic view illustrating a flow of a cooling fluid in a battery pack, viewed from above, according to an embodiment of the present disclosure.
FIG. 6 is a view schematically illustrating a state where an intake portion is closed by venting gas in a battery pack, according to an embodiment of the present disclosure.
FIG. 7 is a view schematically illustrating a state where an opening/closing member is opened in a battery module of FIG. 3.
FIG. 8 is a view illustrating elements of an opening/closing member, viewed from above, according to an embodiment of the present disclosure.
FIG. 9 is a bottom perspective view schematically illustrating elements of an exhaust duct included in a battery pack, according to an embodiment of the present disclosure.
FIG. 10 is a bottom perspective view schematically illustrating elements of an exhaust duct included in a battery pack, according to another embodiment of the present disclosure.
FIG. 11 is a cross-sectional view schematically illustrating a portion of an exhaust duct provided in a battery pack, according to an embodiment of the present disclosure.
FIG. 12 is a cross-sectional view schematically illustrating a portion of an exhaust duct provided in a battery pack, according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

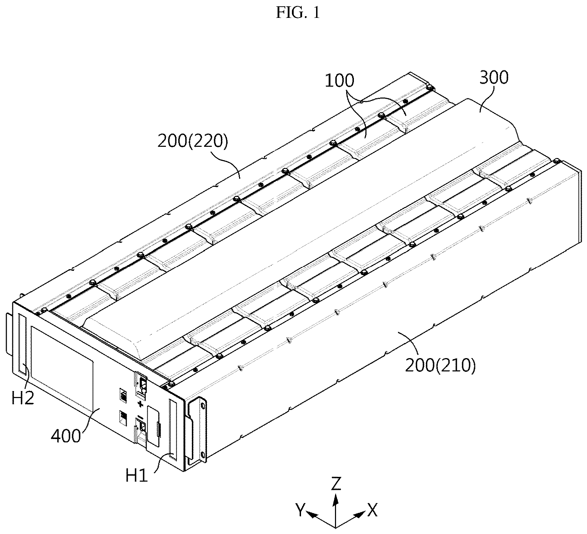

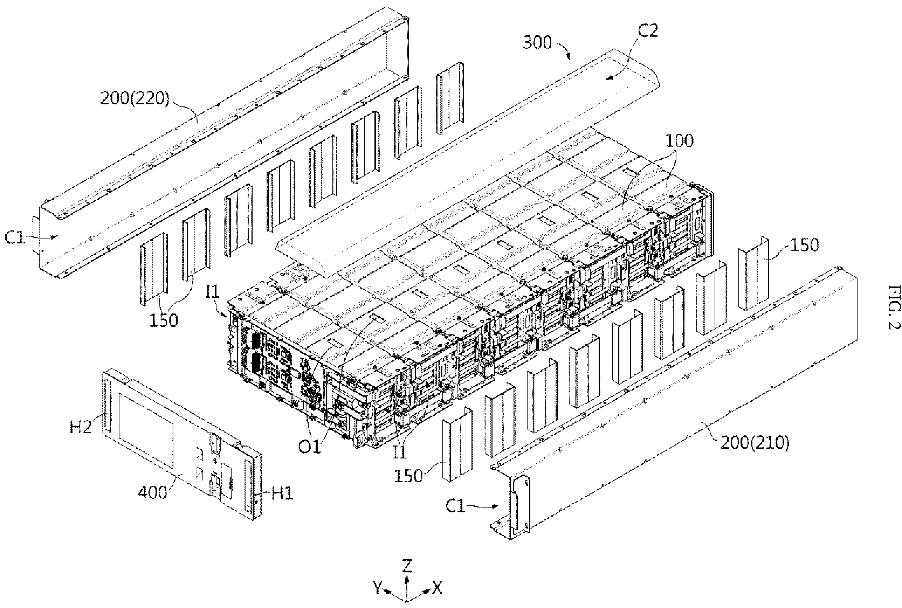

FIG. 1 is a perspective view schematically illustrating elements of a battery pack, according to an embodiment of the present disclosure. FIG. 2 is an exploded perspective view illustrating some elements of FIG. 1.

Referring to FIGS. 1 and 2, a battery pack according to the present disclosure includes a battery module 100, an intake duct 200, and an exhaust duct 300.

The battery module 100 may include one or more battery cells to store and release energy. Each battery cell may refer to a secondary battery. Also, one or more battery modules 100 may be included in the battery pack. In particular, to increase a capacity and/or output of the battery pack, a plurality of battery modules 100 may be included in the battery pack, as shown in FIGS. 1 and 2. In this case, the plurality of battery modules 100 may be stacked in at least one direction. For example, in FIGS. 1 and 2, eight battery modules 100 are arranged in an X axis direction (left-right direction).

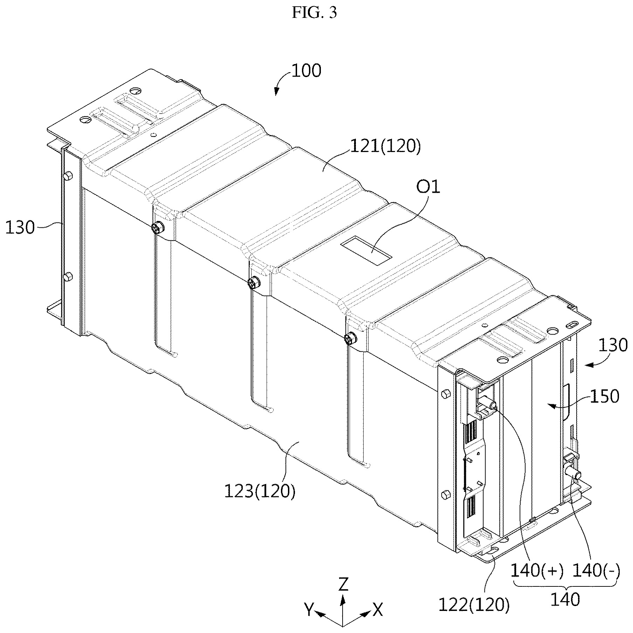

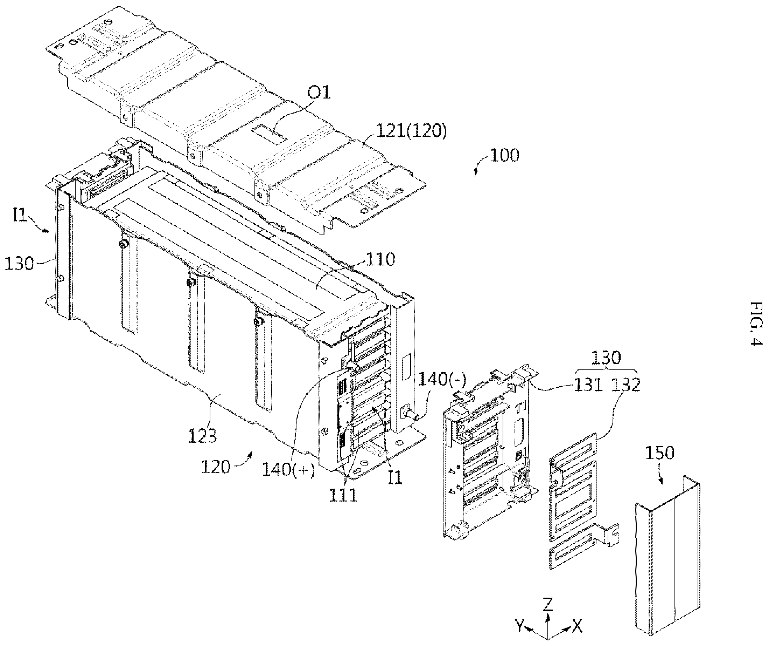

A more specific configuration of the battery module 100 is shown in more detail in FIGS. 3 and 4.

FIG. 3 is a perspective view illustrating one battery module 100 included in a battery pack, according to an embodiment of the present disclosure. Also, FIG. 4 is a partial perspective view illustrating a state where some elements of FIG. 3 are separated.

Referring to FIGS. 3 and 4, the battery module 100 may include a battery cell 110 (secondary battery).

The battery cell 110 may include an electrode assembly, an electrolyte, and a battery case. Although a pouch-type secondary battery is illustrated in FIGS. 3 and 4, another type of secondary battery, for example, a cylindrical battery or a prismatic battery, may be included in the battery module 100.

A plurality of secondary batteries may be included. For example, as shown in the drawings, a plurality of pouch-type secondary batteries may be stacked in a vertical direction while being laid down to constitute a cell assembly. In this case, electrode leads 111 of the batteries may directly contact each other or may be electrically connected to each other through a bus bar or the like.

In particular, the battery module 100 may include an intake portion I1 and an exhaust portion O1. The intake portion I1 and the exhaust portion O1 may communicate with an inner space of the battery module 100. That is, the battery module 100 may include the intake portion I1 and the exhaust portion O1 to communicate with the inner space, in particular, a space in which the battery cell 110 is accommodated. In particular, the intake portion I1 may be configured to allow gas to be introduced into the inner space in which the battery cell 110 is located. The exhaust portion O1 may be configured to allow gas to be discharged to the outside from the inner space in which the battery cell 110 is located.

Furthermore, the battery module 100 may include a module case 120 and a bus bar assembly 130, as shown in FIGS. 3 and 4.

One or more battery cells 110, that is, secondary batteries, may be accommodated in an inner space of the module case 120. For example, the module case 120 may include an upper plate 121, a lower plate 122, and side plates 123, as shown in the drawings. These plurality of plates may be coupled to each other to define the inner space in which the cell assembly may be accommodated.

Some plates included in the module case, for example, the lower plate 122 and the side plates 123 (left and right plates), may be integrally formed with each other. In this case, an integrated shape of the lower plate 122 and the side plates 123 may be substantially a U-shape. Alternatively, the lower plate 122, the side plates 123, and the upper plate 121 may be integrally formed with each other to have a tubular mono frame shape. The plates of the module case 120 may be coupled to each other to define the inner space. The cell assembly may be accommodated in the inner space.

As such, in a state where the inner space in which the battery cell 110 is accommodated is defined by the module case 120, the intake portion I1 and the exhaust portion O1 of the module case 120 may communicate with the defined inner space. In particular, the intake portion I1 and/or the exhaust portion O1 may be formed as a hole passing through a portion of the module case 120. However, the present disclosure is not limited to a specific type of the intake portion I1 and the exhaust portion O1, and the intake portion I1 and the exhaust portion O1 may be formed in any of various other types to open the inner space of the module case 120.

Also, the battery module 100 may include a module terminal 140. For example, the electrode lead 111 of each battery cell 110 may be located on a front side and/or a rear side of the battery module 100, and the module terminal 140 may be located to be electrically connected to the electrode lead 111. In particular, the module terminal 140 may be located on the front side and/or the rear side of the battery module 100 and may protrude forward and/or rearward. Moreover, each battery module 100 may include a positive (+) module terminal and a negative (-) module terminal as the module terminal 140. In this case, the positive (+) module terminal and the negative (-) module terminal may be located on the same side surface of the battery module 100, for example, on a front surface (-Y axis direction) as shown in the drawings. The module terminal 140 may enable the secondary battery (battery cell 110) included in the battery module 100 to be electrically connected to other elements outside the battery module 100, for example, other battery modules 100.

The intake duct 200 may include an intake channel C1 as shown in FIG. 2. The intake channel C1 may allow a fluid, for example, gas, to flow in the intake duct 200. In particular, the intake duct 200 may communicate with the intake portion I1 of each of the plurality of battery modules 100 included in the battery pack. That is, the intake portion I1 may be formed for each battery module 100. The intake duct 200 may be connected to the intake portion I1 of each battery module 100 so that a fluid of the intake duct 200 is movable to the intake portion I1.

The exhaust duct 300 may include an exhaust channel C2 as shown in FIG. 2. The exhaust channel C2 may allow a fluid such as gas to flow in the exhaust duct 300. In particular, the exhaust duct 300 may communicate with the exhaust portion O1 of each of the plurality of battery modules 100. That is, the exhaust portion O1 may be formed for each battery module 100. The exhaust duct 300 may be connected to the exhaust portion O1 of each battery module 100 so that a fluid of the exhaust portion O1 of each battery module 100 is movable to the exhaust duct 300.

In this configuration, the battery module 100 may include an opening/closing member 150. The opening/closing member 150 may be formed to perform an opening/closing operation. Furthermore, the opening/closing member 150 may be configured to open or close (seal) the intake portion I1. In particular, the opening/closing member 150 may be provided close to the intake portion I1, to close the intake portion I1 when internal pressure of the battery module 100 increases.

That is, the opening/closing member 150 may be configured to open the intake portion I1 when internal pressure of the battery module 100 is less than a certain level, and to close the intake portion I1 when internal pressure of the battery module 100 is equal to or greater than the certain level. An opening/closing operation of the opening/closing member 150 may be performed in such a manner that the opening/closing member 150 completely or partially blocks the intake portion I1.

In particular, the intake portion I1 of each battery module 100 may communicate with the intake duct 200. Accordingly, the opening/closing member 150 may be configured so that the intake channel C1 of the intake duct 200 and the intake portion I1 communicate with each other or are blocked according to an internal pressure situation of the battery module 100.

According to this embodiment of the present disclosure, the safety of the battery pack may be improved through the opening/closing operation of the opening/closing member 150. Moreover, when internal pressure of a specific battery module 100 from among the plurality of battery modules 100 increases, it may be predicted that the specific battery module 100 is abnormal. In this case, when the intake portion I1 is closed through the opening/closing operation of the opening/closing member 150, the discharge of heat or the like to the intake duct 200 may be reduced or prevented. Hence, propagation of a thermal event such as propagation of thermal runaway between the battery modules 100 through the intake duct 200 may be prevented.

Furthermore, in an aspect of the present disclosure, the opening/closing operation of the opening/closing member 150 may be automatically performed. In particular, the opening/closing member 150 may be automatically opened as venting gas or the like is generated and internal pressure of the battery module 100 increases. Also, the opening/closing member 150 may be automatically closed, when internal pressure of the battery module 100 is equal to or less than a certain level. That is, in this aspect of the present disclosure, a device for providing a driving force to open/close the opening/closing member 150, for example, a motor is not required. Also, according to this aspect of the present disclosure, to open/close the opening/closing member 150, a separate control signal does not need to be applied to the opening/closing member 150.

The intake portion I1 may be formed on a side surface of each battery module 100. For example, referring to FIG. 2, the intake portion I1 may be formed on a front surface and a rear surface of each battery module 100. That is, each battery module 100 may include four side surfaces, that is, front, rear, left, and right surfaces. In this case, in a state where a plurality of battery modules 100 are arranged parallel to each other in the left-right direction (X axis direction), the intake portion I1 may be formed on each of both front and rear surfaces. In this case, two intake portions I1 may be formed for each battery module 100. In particular, the intake portion I1 may be formed on the module case 120 of the battery module 100. For example, the intake portion I1 may be formed as a hole or a cut portion formed in the module case 120.

Also, the exhaust portion O1 may be formed on a top surface of each battery module 100. For example, referring to FIG. 2, the exhaust portion O1 may be formed on an upper portion of each of the plurality of battery modules 100 arranged in the left-right direction. In particular, as shown in FIGS. 3 and 4, the upper plate 121 may be located as the module case 120 on the upper portion of the battery module 100. The exhaust portion O1 may be formed on the upper plate 121. In this case, the exhaust portion O1 may be formed as a hole or a cut portion in the upper plate 121.

Corresponding to a configuration of the intake portion I1 and the exhaust portion O1, the intake duct 200 may be located on a side of the plurality of battery modules 100, in particular, a front side and a rear side of the plurality of battery modules 100, as shown in FIGS. 1 and 2. The exhaust duct 300 may be located on upper portions of the plurality of battery modules 100, as shown in FIGS. 1 and 2.

According to this embodiment of the present disclosure, cooling and/or venting performance of the battery pack may be stably ensured. In particular, cooling gas introduced into each battery module 100 through the intake portion I1 may take heat from the battery cell 110 and a temperature may increase. The cooling gas whose temperature increases may be directed to the upper portion of each battery module 100. In this case, when the exhaust portion O1 is formed on the upper portion of each battery module 100, the cooling gas in each battery module 100 may be more smoothly discharged to the outside of the battery module, in particular, to the exhaust duct 300, through the exhaust portion O1 on the upper portion. Also, when venting gas is generated in each battery module 100, the venting gas that is high-temperature gas tends to move upward from an inner space of the battery module. Accordingly, according to the configuration, the venting gas may be more smoothly discharged through the exhaust portion O1 located on the upper portion of the battery module 100 and the exhaust duct 300.

Also, according to the embodiment, the intake duct 200 may be located on a side portion of the battery module 100, and the exhaust duct 300 may be located on an upper portion of the battery module 100. In this case, the intake duct 200 and the exhaust duct 300 may be located outside the battery pack and may function as at least a part of the pack case.

As shown in FIGS. 1 and 2, the battery pack according to the present disclosure may further include a side case 400. The side case 400 may cover at least a part of a module stack of the plurality of battery modules 100. The side case 400 may be coupled to the intake duct 200 and/or the exhaust duct 300. In particular, intake holes H1 and H2 may be formed in the side case 400. The intake holes H1 and H2 may communicate with the intake channels C1 of the intake duct 200. For example, the first intake hole H1 may communicate with the intake channel C1 of a first intake duct 210 located on a front side. The second intake hole H2 may communicate with the intake channel C1 of a second intake duct 220 located on a rear side.

In this embodiment, the intake duct 200, the exhaust duct 300, and the side case 400 may function various components of the pack case. In particular, the battery pack may include the plurality of battery modules 100 and electronic components such as a battery management system (BMS). In this case, the intake duct 200, the exhaust duct 300, and the side case 400 may be at least partially coupled to each other, and may be located outside the battery module 100 or the electronic component to cover the battery module 100 or the electronic component. For example, the intake duct 200 and the exhaust duct 300 may cover a front side and a rear side of the module stack. An electronic component may be located on the left of the module stack, and the side case 400 may cover the electronic component and a left portion of the module stack.

The intake duct 200 may cover the bus bar assembly 130 of each of the plurality of battery modules 100. In particular, at least a side of the module case 120 of each battery module 100 may be open. The electrode lead 111 of the cell assembly may be located on the open portion. In this case, the open portion of the module case 120 where the electrode lead is located may constitute the intake portion I1 of each battery module 100.

In particular, the battery module 100 may include the bus bar assembly 130 and may be coupled to the open portion of the module case 120. For example, as shown in FIGS. 3 and 4, the bus bar assembly 130 may be coupled to each of front and rear open portions of the module case 120, that is, the intake portions I1. The electrode lead 111 of the cell assembly may be located on each of the front and rear portions of the module case 120, and the bus bar assembly 130 may be coupled to the electrode lead 111. In a more specific example, the bus bar assembly 130 may include a bus bar housing 131 and a module bus bar 132, as shown in FIGS. 3 and 4.

The bus bar housing 131 may be formed of an electrically insulating material, for example, a plastic material. The module bus bar 132 may be seated on and fixed to the bus bar housing 131. The module bus bar 132 may be formed of an electrically conductive material, for example, a metal material. The module bus bar 132 may be configured to electrically connect two or more electrode leads 111, or may be connected to one or more electrode leads 111 to transmit sensing information to a control unit such as a battery management unit (BMS).

As such, in the battery module 100 included in the battery pack according to the present disclosure, specific sides, for example, front and rear sides where the bus bar assembly 130 is located may be open to function as the intake portions I1. In particular, the bus bar assembly 130 may include a slit through which the electrode lead 111 may pass. In this case, the intake portion I1 of each battery module 100 may communicate an inner space of the module case 120 with an outer space through the slit.

For example, referring to FIGS. 2 to 4, the bus bar assembly 130 may be located on front and rear sides of each battery module 100. In this case, the intake duct 200 may be coupled to each of front and rear sides of the module stack. Accordingly, the intake duct 200 may cover the bus bar assemblies 130 of the plurality of battery modules 100.

According to this embodiment of the present disclosure, the intake duct 200 may provide a channel through which a fluid flows, and may protect the bus bar assembly of each battery module 100. Accordingly, in this case, the intake duct 200 may perform both a duct function and a pack case function of each battery module 100. Hence, in this embodiment, because one element may perform various functions, and thus, elements for performing various functions do not need to be separately provided, manufacturing may be easy and economical, and energy density of the battery pack may be further increased.

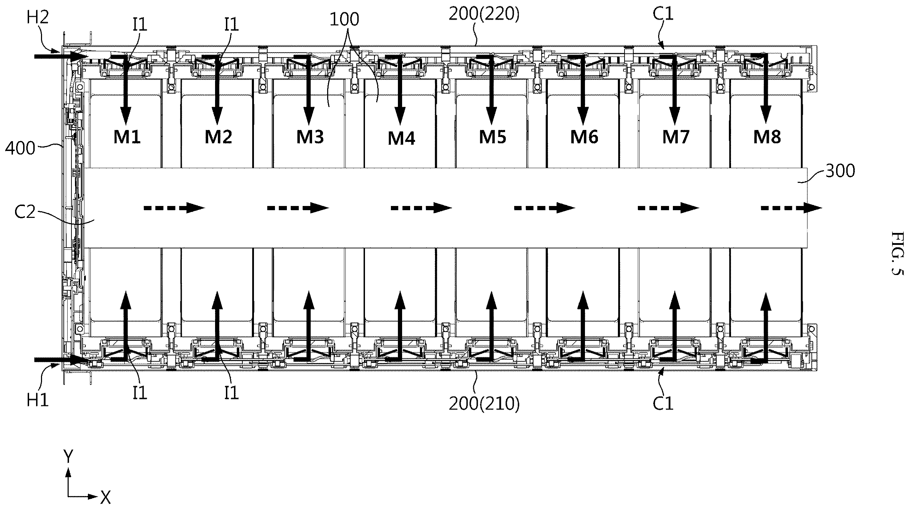

The intake duct 200 may be configured to supply a cooling fluid, and the exhaust duct 300 may be configured to discharge the cooling fluid to the outside, which will be described in more detail with reference to FIG. 5.

FIG. 5 is a schematic view illustrating a flow of a cooling fluid in a battery pack, viewed from above, according to an embodiment of the present disclosure.

Referring to FIG. 5, the intake duct 200 may be configured to supply a cooling fluid to the plurality of battery modules 100. For example, as shown in FIG. 5, the intake duct 200 may extend long in the left-right direction, and may be coupled to each of front and rear sides of the module stack in which the plurality of battery modules 100 are stacked in the left-right direction. In this case, the intake portion I1 may be located on each of the front and rear sides of the module stack to which the intake duct 200 is coupled. As marked by a solid arrow, a cooling fluid, for example, air, may be introduced into the intake duct 200 through each of the intake holes H1 and H2 of the side case 400 located on a left side of the module stack, and may flow through the intake channel C1. The cooling fluid flowing through the intake channel C1 may be introduced into the battery module 100 through the intake portion I1 located on each of front and rear sides of each battery module 100.

The exhaust duct 300 may be configured to discharge the cooling fluid supplied to the plurality of battery modules 100 to the outside. For example, as shown in FIG. 5, the exhaust duct 300 may extend long in the left-right direction and may be coupled to an upper portion of the module stack. In this case, the exhaust portion O1 may be located on the upper portion of the module stack to which the exhaust duct 300 is coupled. The fluid introduced into each battery module 100 through the intake duct 200 may flow through an inner space of the battery module 100 and then may be discharged to the exhaust portion O1 located on the upper portion. The cooling fluid discharged through the exhaust portion O1 of each battery module 100 may be discharged to the outside of the battery pack through the exhaust channel C2 of the exhaust duct 300, as marked by a dashed arrow.

According to this embodiment of the present disclosure, a flow of a cooling fluid through the intake duct 200 and the exhaust duct 300 may be more smoothly guided. Accordingly, cooling performance of the battery pack may be further improved.

In this embodiment, the opening/closing member 150 may be configured to open the intake portion I1 when a cooling fluid is supplied through the intake duct 200. That is, in the embodiment of FIG. 5, when a cooling fluid is introduced into the intake duct 200 as marked by a solid arrow, the opening/closing member 150 located close to the intake portion I1 of each battery module 100 may open the intake portion I1 to allow the cooling fluid to be introduced into the battery module 100 from the intake duct 200.

In particular, the opening/closing member 150 may perform an opening operation and a closing operation. The opening/closing member 150 may be configured to open the intake portion I1 when internal pressure of the intake duct 200 is higher than internal pressure of the battery module 100. For example, when a cooling fluid is introduced into the intake duct 200 in a normal state of the battery module 100, internal pressure of the intake duct 200 may be higher than internal pressure of the battery module 100. In this case, the opening/closing member 150 may change from a closed state to an open state, to allow the cooling fluid in the intake duct 200 to be introduced into the battery module 100. In contrast, when a cooling fluid is not supplied into the intake duct 200 in a normal state of the battery module 100, internal pressure of the intake duct 200 may be similar to internal pressure of the battery module 100. In this case, the opening/closing member 150 may be maintained in the closed state.

According to this embodiment of the present disclosure, because the opening/closing member 150 is opened when a cooling fluid is supplied, the cooling fluid may be smoothly introduced into the battery module 100. Because the opening/closing member 150 is not opened when a cooling fluid is not supplied, an external foreign material, for example, dust or moisture in the intake duct 200, may be prevented from being introduced into the battery module 100.

In the above embodiment, the intake duct 200 may be formed so that a cross-sectional area of the intake channel C1 is partially different. In particular, the intake duct 200 may be formed so that a cross-sectional area of a channel at an end portion into which a cooling fluid is introduced is greater than a cross-sectional area of the channel at the opposite end portion. For example, in a configuration of FIG. 5, a cooling fluid may be introduced from a left end portion of the intake duct 200 and may flow rightward in the intake channel C1. In this case, a channel cross-sectional area of the left end portion of the intake duct 200 may be greater than a channel cross-sectional area of a right end portion.

Furthermore, the intake duct 200 may be formed so that a cross-sectional area of a channel gradually decreases away from an end portion where a cooling fluid is introduced. For example, in the embodiment of FIG. 5, the intake duct 200 may be formed so that a size of the intake channel C1 decreases from a left end portion to a right end portion.

According to this configuration of the present disclosure, the amount of cooling fluid introduced the plurality of battery modules 100 arranged in the left-right direction may be uniform.

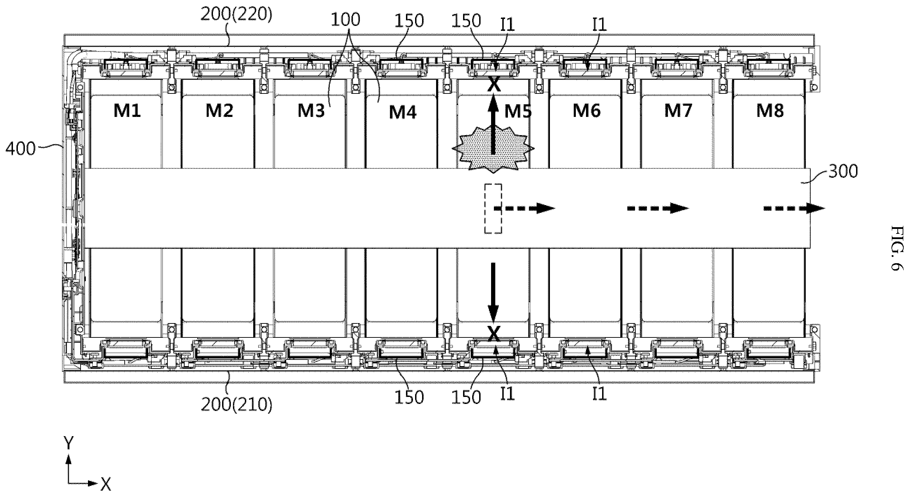

The opening/closing member 150 may be configured to close the intake portion I1 when venting gas is generated in the battery module 100, which will be described in more detail with reference to FIG. 6.

FIG. 6 is a view schematically illustrating a state where the intake portion I1 is closed by venting gas in a battery pack, according to an embodiment of the present disclosure.

Referring to FIG. 6, when venting gas is generated in a module M5, from among a plurality of battery modules 100 M1 to M8 arranged in the left-right direction, internal pressure of the module M5 may increase. Due to the increase in the internal pressure, the opening/closing member 150 of the module M5 may close the intake portion I1 of the module M5. When the intake portion I1 is closed, it may include a case where the intake portion I1 is changed from an open state to a closed state and a case where the intake portion I1 is maintained in the closed state.

Accordingly, the venting gas in the module M5 may not flow out toward the intake duct 200 as marked by a solid arrow. In this case, because the exhaust portion O1 may be formed in the module M5, the venting gas may be discharged to the exhaust portion O1. The venting gas in the module M5 discharged through the exhaust portion O1 may be discharged to the outside through the exhaust duct 300, as marked by a dashed arrow.

According to this embodiment of the present disclosure, even when venting gas is generated in a specific battery module 100 from among the plurality of battery modules 100, the venting gas may not be introduced into the intake duct 200. Accordingly, propagation of thermal runaway occurring when the venting gas is introduced into other battery modules 100 through the intake duct 200 may be effectively prevented.

The venting gas introduced into the exhaust duct 300 may be introduced into the other battery module 100 through the exhaust portion O1 of the other battery module 100. However, in this case, when internal pressure of the other battery module 100 is increased due to the introduction of the venting gas, the opening/closing member 150 of the other battery module 100 may also be closed. Accordingly, in this case, the venting gas may be prevented from being continuously introduced into the other battery module through the exhaust portion O1 of the other battery module 100. Furthermore, in this case, because pressure of an outlet of the exhaust duct 300 is low, a fluid in the exhaust duct 300 may be more likely to be move toward the outlet of the exhaust duct 300, than into the other battery module 100.

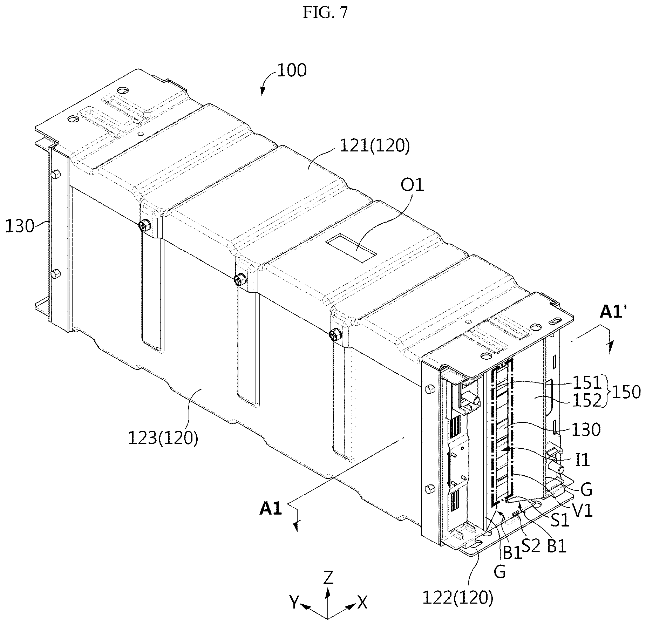

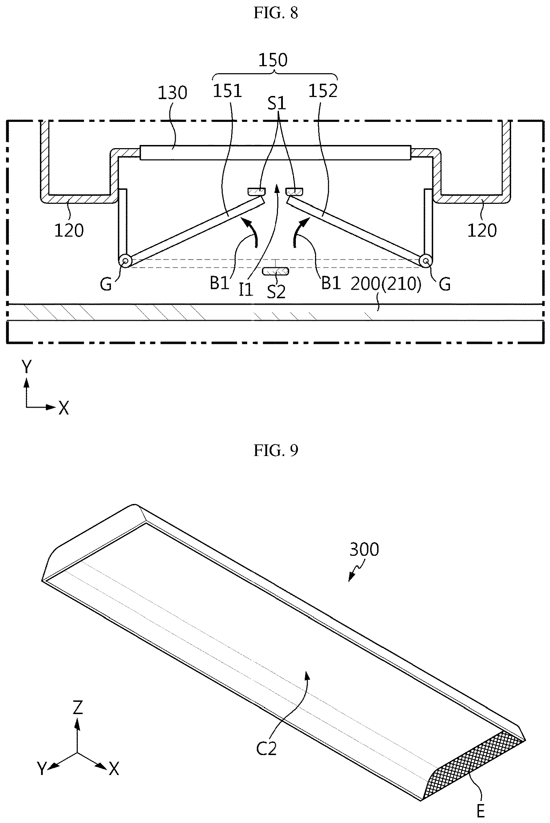

The opening/closing member 150 may be pivotable around a hinge to open or close the intake portion I1, which will be described with further reference to FIGS. 7 and 8.

FIG. 7 is a view schematically illustrating a state where the opening/closing member 150 is opened in the battery module 100 of FIG. 3. Also, FIG. 8 is a view illustrating a state where the opening/closing member 150 is opened, viewed from above, according to an embodiment of the present disclosure. For example, FIG. 8 is a schematic cross-sectional view taken along line A1-A1' of FIG. 7. In particular, in FIG. 8, for convenience of explanation, members other than the opening/closing member 150 are not shown or schematically illustrated.

Referring to FIGS. 7 and 8, the opening/closing member 150 may include a hinge G, and may be pivotable around the hinge G. The opening/closing member 150 may be switched to an open state or a closed state, by a rotational movement around the hinge G. In particular, because the opening/closing member 150 is provided close to the intake portion I1 of the battery module 100, the opening/closing member 150 may be opened or closed to open or close the intake portion I1.

For example, when the opening/closing member 150 is located as marked by a dashed line in FIG. 8, the opening/closing member 150 may be in a closed state. In this case, the opening/closing member 150 may be configured as shown in FIG. 3. Furthermore, in this state, the opening/closing member 150 may close the intake portion I1 of the battery module 100.

In contrast, when the opening/closing member 150 rotates around a hinge shaft as marked by an arrow B1 in a configuration of FIG. 8, the opening/closing member 150 may be in an open state. In this state, the opening/closing member 150 may be configured as shown in FIG. 7. In this state, the opening/closing member 150 may open the intake portion I1 of the battery module 100. That is, when the opening/closing member 150 is opened, the intake portion I1 may be exposed to the outside of the battery module 100, as shown in a portion V1 in FIG. 7.

In particular, when a cooling fluid is introduced into the intake duct 200 and internal pressure of the intake duct 200 increases, the opening/closing member 150 may rotate as marked by the arrow B1 in FIGS. 7 and 8. In this case, each opening/closing member 150 provided in the plurality of battery modules 100 may be opened, and the cooling fluid may flow as marked by a solid arrow in FIG. 5.

Also, when venting gas is generated in the battery module 100 and internal pressure of the battery module 100 increases, the opening/closing member 150 may rotate in a direction opposite to the arrow B1 of FIGS. 7 and 8. In this case, the opening/closing member 150 provided in the battery module 100 may be closed, and the venting gas may be prevented from flowing out from the battery module 100 toward the intake duct 200, as marked by a solid arrow in FIG. 6. In this case, because the exhaust portion O1 is provided in the battery module 100, the venting gas in the battery module 100 may flow out to the exhaust duct 300 through the exhaust portion O1, and may flow along the exhaust duct 300 as marked by a dashed arrow in FIG. 6.

According to this embodiment of the present disclosure, an opening/closing configuration of the intake portion I1 by the opening/closing member 150 may be more easily implemented.

The opening/closing member 150 may include an elastic body to control a rotational movement around the G. For example, the opening/closing member 150 may include an elastic body such as a spring. In this case, due to an elastic force of the elastic body, in a normal state, the opening/closing member 150 may be maintained in a closed state as marked by a dashed line in FIG. 8 or as shown in FIG. 3. When a cooling fluid is introduced into the intake duct 200 and a pressing force of the cooling fluid to the opening/closing member 150 is higher than an elastic force of the elastic body, the opening/closing member 150 may rotate as marked by the arrow B1 in FIGS. 7 and 8 and may be switched to an open state as shown in FIGS. 7 and 8. In this case, the cooling fluid may be introduced into the battery module 100 through the intake portion I1 of the battery module 100.

When the cooling fluid is no longer supplied to the intake duct 200 or the amount of the cooling fluid decreases, and thus, a pressing force of the cooling fluid is lower than an elastic force of the elastic body, the opening/closing member 150 may rotate in a direction opposite to the arrow B1 and may be switched to a closed state as marked by a dashed line of FIG. 8 or as shown in FIG. 3.

According to this embodiment of the present disclosure, when internal pressure of the battery module 100 increases due to venting gas, an opening/closing operation of the opening/closing member 150 may be more rapidly performed. Also, according to this embodiment, because the opening/closing member 150 is maintained in a closed state when a cooling fluid is not introduced in a normal state, a foreign material such as dust or moisture may be more reliably prevented from being introduced into the intake portion I1 of the battery module 100.

The opening/closing member 150 may include a first door 151 and a second door 152, as shown in FIGS. 7 and 8. Each of the first door 151 and the second door 152 may rotate around a hinge shaft. In particular, the first door 151 and the second door 152 may rotate in opposite directions to be opened or closed. In this case, the hinges G may be provided on end portions of the first door 151 and the second door 152 which are far from each other, and the first door 151 and the second door 152 may rotate around the hinges G. In this case, end portions of the first door 151 and the second door 152 which are close to each other may be movable.

For example, when the opening/closing member 150 is opened, the first door 151 may rotate counterclockwise direction, and the second door 152 may rotate clockwise. In this case, a gap between the first door 151 and the second door 152 may be widened, and thus, the intake portion I1 may be exposed to the outside of the module through the gap. Accordingly, in this case, the intake portion I1 may be in an open state.

In contrast, when the opening/closing member 150 is closed, the first door 151 may rotate clockwise, and the second door 152 may rotate counterclockwise. A gap between the first door 151 and the second door 152 may be reduced, and when the end portions of the first door 151 and the second door 152 contact each other, the opening/closing member 150 may be closed. In this case, because the intake portion I1 is not exposed to the outside of the module, the intake portion I1 may be in a closed state.

According to this embodiment of the present disclosure, an opening/closing configuration of the opening/closing member 150 may be more smoothly implemented. In particular, the bus bar assembly 130 may be located inside the opening/closing member 150. A space between the opening/closing member 150 and the bus bar assembly 130 may be narrow. In this case, the two doors, that is, the first and second doors 151, 152, constituting the opening/closing member 150 may provide a sufficient opening portion through which a cooling fluid may be introduced even when the first and second doors 151, 152 move a short distance.

Accordingly, because an opening operation of the opening/closing member 150 may be performed in this narrow space, the battery module 100 or the battery pack may be easily miniaturized. Also, in the above embodiment, when venting gas is generated, because the first and second doors 151, 152 move a short distance to perform a closing operation, the venting gas may be more rapidly prevented from being discharged through intake portion I1.

Also, according to this embodiment, when the opening/closing member 150 is opened, the open portion V1 may be formed at the center of the opening/closing member 150 in the left-right direction. When a cooling fluid is introduced through the open portion V1 at the center, the cooling fluid is likely to be introduced into left and right sides of the battery module 100. Hence, in this case, because the cooling fluid may uniformly flow to the left and right sides in the battery module 100, stable cooling performance of the battery module 100 may be ensured.

The battery module 100 may include a stopper configured to stop a movement of the opening/closing member 150.

First, the battery module 100 may include a first stopper S1, as shown in FIG. 8. The first stopper S1 may be configured so that the opening/closing member 150 is no longer opened when the opening/closing member 150 is opened. In particular, when the opening/closing member 150 is opened, a movable end portion of an opening/closing door (door) may move toward the bus bar assembly 130. In this case, the first stopper S1 may be configured so that the opening/closing door no longer moves toward the bus bar assembly 130.

According to this embodiment of the present disclosure, damage to or short-circuit of the bus bar assembly 130 due to an opening operation of the opening/closing member 150 may be prevented.

Also, the battery module 100 may include a second stopper S2, as shown in FIG. 8. The second stopper S2 may be configured so that the opening/closing member 150 no longer rotates when the opening/closing member 150 is closed. In particular, in FIG. 8, the opening/closing door may rotate in a direction opposite to the arrow B1 to be in a closed state as marked by a dashed line. In this case, when the opening/closing door continues to rotate in the direction opposite to the arrow B1, facing end portions of the opening/closing door may be spaced apart from each other, to rather open the opening/closing member 150. The second stopper S2 may be configured to stop a movement of the opening/closing member 150 so that the opening/closing member 150 is well maintained in a closed state when the opening/closing member 150 is closed. In particular, when venting gas is generated in the battery module 100, the opening/closing door may be pushed to the outside of the module (-Y axis direction), and in this case, the second stopper S2 may prevent the opening/closing door from being pushed.

Hence, according to this embodiment of the present disclosure, when the opening/closing member 150 is closed due to generation of venting gas or the like, a closed state may be stably maintained.

The opening/closing member 150 may be formed of an insulating material such as plastic. In this case, even when the opening/closing member 150 contacts the bus bar assembly 130, a short-circuit or the like may be prevented. Alternatively, the opening/closing member 150 may be formed of an electrically conductive material such as a metal to increase mechanical strength, but in this case, at least a part of the opening/closing member 150, for example, an end portion of the opening/closing member 150, may be coated with an insulating material or have a surface wrapped by an insulating material.

In other embodiments, the opening/closing member 150 may be formed of any of various other materials or shapes.

FIG. 9 is a bottom perspective view schematically illustrating elements of the exhaust duct 300 included in a battery pack, according to an embodiment of the present disclosure.

Referring to FIG. 9 together with the above drawings, the exhaust duct 300 may include an empty inner space, that is, the exhaust channel C2. Venting gas or a cooling fluid discharged from the battery module 100 may flow through the exhaust channel C2, and then may flow out to the outside through an outlet of the exhaust duct 300. In this case, the exhaust duct 300 may be formed so that a lower portion and a right portion are open, and an upper portion, a front portion, a rear portion, and a left portion are closed, as shown in FIG. 9. In this case, the open lower portion of the exhaust duct 300 may be coupled to a portion of the plurality of battery modules 100 where the exhaust portion O1 is formed. In this case, the open lower portion of the exhaust duct 300 may be an inlet of the exhaust channel C2. Also, the open right portion of the exhaust duct 300 may function as an outlet. Accordingly, a cooling fluid or venting gas discharged from each battery module 100 may be introduced through the open lower portion of the exhaust duct 300 and may flow toward the outlet.

In particular, the open lower portion of the exhaust duct 300 may be completely open, as shown in FIG. 9. In this case, the exhaust duct 300 may be easily assembled to the module stack. That is, because the inlet of the exhaust channel C2 is wide, a configuration of communicating the inlet of the exhaust channel C2 with the exhaust portion O1 may be more easily implemented.

The exhaust duct 300 may include a mesh member E located close to the outlet, as shown in FIG. 9. The mesh member E may be formed by forming a plurality of holes in a plate-shaped member or by weaving a plurality of wires like a net.

According to this embodiment of the present disclosure, a spark or high-temperature active material particles in venting gas discharged through the exhaust duct 300 may be filtered by the mesh member E. Accordingly, the spark or the active material particles may be prevented from being discharged to the outside of the battery pack and causing a fire.

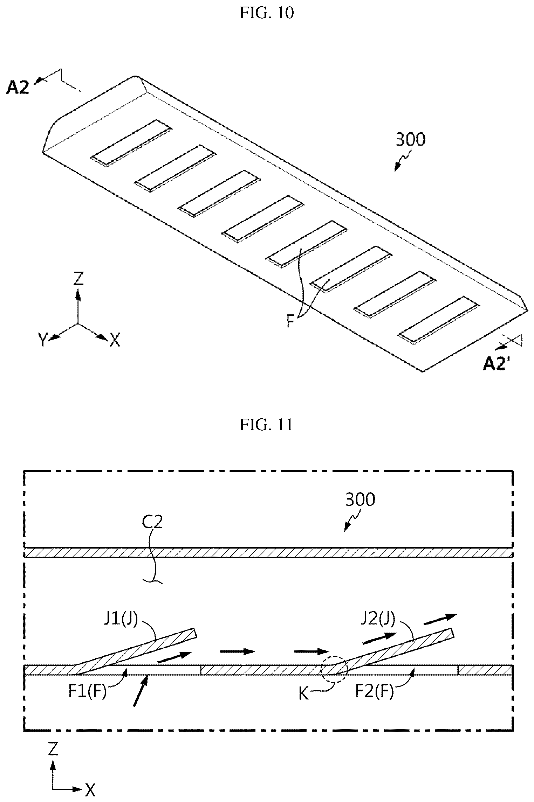

FIG. 10 is a bottom perspective view schematically illustrating elements of the exhaust duct 300 included in a battery pack, according to another embodiment of the present disclosure. When various embodiments of the present specification including the present embodiment are described, for parts to which descriptions of the above embodiments are equally or similarly applicable, descriptions thereof are omitted, and different parts are mainly described.

Referring to FIG. 10, the exhaust duct 300 may include an inlet F formed on at least one surface, in particular, a bottom surface. In more detail, the exhaust duct 300 may include a plate-shaped member at the bottom, and the inlet F having a hole may be formed in the plate-shaped member. The inlet F may communicate with the exhaust channel C2.

Furthermore, a plurality of inlets F may be formed to each correspond to the exhaust portion O1 of each battery module 100. For example, as shown in FIG. 2, when the battery pack includes eight battery modules 100 and one exhaust portion O1 is formed for each battery module 100, a total of eight exhaust portions O1 may be formed in the battery pack. In this case, the exhaust duct 300 may include eight inlets F formed to respectively correspond to the exhaust portions O1. The inlets F may communicate with different exhaust portions O1. Accordingly, each inlet F may be designed in an appropriate position and shape to communicate with the corresponding exhaust portion O1.

According to this embodiment of the present disclosure, while venting gas introduced into the exhaust channel C2 moves to an outlet of the exhaust duct 300, the influence of the venting gas on other battery modules 100 closer to the outlet may be reduced. In particular, according to the embodiment, because a portion other than the inlet F is closed by the lower plate-shaped member of the exhaust duct 300, the risk that venting gas contacts other battery modules 100 while flowing along the exhaust channel C2 may be reduced. Accordingly, because the risk that heat of the venting gas is transferred to the other battery modules 100 may be prevented or reduced, propagation of thermal runaway or the like may be effectively prevented.

The exhaust duct 300 may include a blocking portion configured to control a flow direction of gas flowing through the exhaust duct 300, which will be described in more detail with reference to FIG. 11.

FIG. 11 is a cross-sectional view schematically illustrating a portion of the exhaust duct 300 provided in a battery pack, according to an embodiment of the present disclosure. For example, FIG. 11 may be a partial cross-sectional view taken along line A2-A2' of FIG. 10, according to an embodiment.

Referring to FIG. 11, at least two inlets, for example, first and second inlets F1, F2 may be formed at the bottom of the exhaust duct 300, and the first and second inlets F1, F2 may communicate with different exhaust portions O1 of the battery modules 100. In this configuration, the exhaust duct 300 may include a blocking portion J. The blocking portion J may be provided for each inlet. For example, as shown in FIG. 11, a first blocking portion J1 may be provided at the first inlet F1, and a second blocking portion J2 may be provided at the second inlet F2.

In particular, the blocking portion J may be configured to block gas, which flows after being introduced into the exhaust duct 300, from being introduced into other inlets F. For example, when gas, for example, venting gas or cooling gas is introduced through the first inlet F1, and an outlet of the exhaust duct 300 is located in a right direction (+X axis direction), the gas may flow rightward as marked by an arrow in FIG. 11. In this case, the second blocking portion J2 provided at the second inlet F2 may prevent or reduce the gas introduced into the exhaust duct 300 through the first inlet F1 from entering the second inlet F2.

Furthermore, the blocking portion J may protrude upward while one end is fixed to a bottom plate of the exhaust duct 300. In this case, the blocking portion J may include an inclined surface that is gradually inclined toward the outlet as it goes upward. In particular, a fixed portion of the blocking portion J may be located on a side surface opposite to the outlet with respect to the inlet F. For example, in an embodiment of FIG. 11, in the case of the second inlet F2, a portion K of the second blocking portion J2 may be fixed to the bottom plate of the exhaust duct 300 on a left side opposite to the outlet. The second blocking portion J2 may be inclined in a rightward direction where the outlet is located as it goes upward.

According to this embodiment of the present disclosure, gas introduced into the exhaust duct 300 may be prevented from being introduced into the exhaust portions of other battery modules 100 as much as possible.

For example, in the embodiment of FIG. 11, gas introduced through the first inlet F1 may flow toward the second inlet F2, and then may flow upward at the portion K away from the second inlet F2. In this case, the gas may be more effectively prevented from being introduced into the second inlet F2.

Also, when an inclined surface of the blocking portion J is inclined toward the outlet as it goes upward as in the above embodiment, the risk that when gas flows in the exhaust duct 300 toward the outlet, a flow of the gas is disturbed by the blocking portion J may be reduced. Hence, in this case, the gas may smoothly flow.

In addition, in the embodiment, when gas is introduced into the exhaust duct 300 through the first inlet F1, an inflow direction may be toward the outlet. Accordingly, the gas may be prevented from flowing to other inlets (not shown) located on a left side of the first inlet F1.

Although only two inlets, that is, the first and second inlets F1, F2, in the exhaust duct 300 are illustrated in FIG. 11, a configuration of FIG. 11, in particular, a configuration of the blocking portion J may be applied to other inlets.

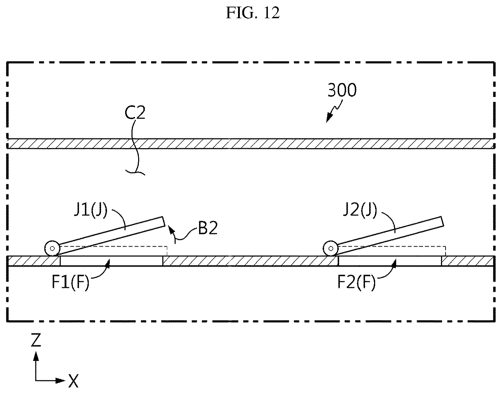

FIG. 12 is a cross-sectional view schematically illustrating a portion of the exhaust duct 300 provided in a battery pack, according to another embodiment of the present disclosure. For example, FIG. 12 may be a partial cross-sectional view taken along line A2-A2' of FIG. 10, according to another embodiment.

Referring to FIG. 12, the blocking portion J of the exhaust duct 300 is configured to open or close each inlet F. In particular, the blocking portion J of the exhaust duct 300 may be pivotable around a hinge. Due to pivoting of the blocking portion J around the hinge, the inlet F may be opened or closed. For example, in FIG. 12, the first blocking portion J1 may be located to close the first inlet F1 as marked by a dashed line, and then may rotate in a direction marked by an arrow B2 to open the first inlet F1.

In particular, the blocking portion J may include an elastic body such as a spring, and when a force of a certain level or more is applied, the blocking portion J may rotate in the direction marked by the arrow B2 to be opened. Moreover, the exhaust portion O1 of the battery module 100 may be located outside the inlet F of the exhaust duct 300, for example, under the inlet F. The blocking portion J may configured to be opened, like the first blocking portion J1, through rotation when gas, for example, a cooling fluid or venting gas is introduced from the exhaust portion O1 toward an inlet and applied pressure (force) is equal to or greater than a certain level. When there is no force applied to the blocking portion J or a force less than the certain level is applied, the blocking portion J may be closed, like the second blocking portion J2. In particular, the blocking portion J may be configured so that even when internal pressure of the exhaust duct 300 increases, the blocking portion J is not opened and is more reliably closed.

According to this embodiment of the present disclosure, when venting gas is generated in a specific battery module 100 and is introduced into the exhaust duct 300, the venting gas may be more reliably prevented from being introduced into other battery modules 100 through other inlets F and exhaust portions O1. For example, in an embodiment of FIG. 12, when venting gas is discharged from the exhaust portion O1 of the battery module 100 corresponding to the first inlet F1, the first blocking portion J1 may rotate as marked by the arrow B2 to open the first inlet F. In this case, because the second blocking portion J2 closes the second inlet F2, the venting gas introduced into the exhaust duct 300 may not be introduced into other battery modules 100 through the second inlet F2. Hence, according to this embodiment of the present disclosure, propagation of thermal runaway or the like between the battery modules 100 due to introduction of venting gas may be more reliably prevented.

Also, according to this embodiment of the present disclosure, when venting gas or a cooling fluid is not introduced into the exhaust duct 300 from the battery module 100, the inlet of the exhaust duct 300 may be maintained in a closed state. Accordingly, in this case, even when a foreign material such as external dust or moisture is introduced into the exhaust duct 300, the foreign material may be prevented from being introduced into the battery module 100.

The battery pack according to the present disclosure may further include various other elements of battery packs known at the time of filing the present application. For example, the battery pack according to the present disclosure may further include elements such as a battery management system (BMS), a current sensor, and a fuse.

An energy storage system (ESS) according to the present disclosure may include one or more battery packs according to the present disclosure. In particular, an ESS may include a plurality of battery packs according to the present disclosure which are electrically connected to each other to have a large energy capacity. In addition, the ESS according to the present disclosure may further include various other elements of ESSs known at the time of filing the present application. Furthermore, the ESS may be used in various places or devices such as a smart grid system or an electric charging station.

A vehicle according to the present disclosure may include one or more battery packs according to the present disclosure. Also, the vehicle according to the present disclosure may include various other elements included in vehicles in addition to the battery pack. For example, the vehicle according to the present disclosure may further include a vehicle body, a motor, and a control device such as an electronic control unit (ECU) in addition to the battery pack according to the present disclosure.

It will be understood by one of ordinary skill in the art that when terms indicating directions such as upper, lower, left, right, front, and rear are used, these terms are only for convenience of explanation and may vary according to a position of a target object, a position of an observer, etc. Also, in the present specification, the terms "inner" and "outer" may be used. Unless otherwise described, for each component, an inner direction may be a direction toward the center of a battery pack or a corresponding component, and an outer direction may refer to the opposite direction.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

### [Description of Reference Numerals]

100: battery module
110: battery cell
111: electrode lead
120: module case
121: upper plate, 122: lower plate, 123: side plate
130: bus bar assembly
131: bus bar housing, 132: module bus bar
140: module terminal
150: opening/closing member
151: first door, 152: second door
200: intake duct
210: first intake duct, 220: second intake duct
300: exhaust duct
400: side case
H1: first intake hole, H2: second intake hole
I1: intake portion, O1: exhaust portion
C1: intake channel, C2: exhaust channel
F: inlet, F1: first inlet, F2: second inlet
G: hinge
J: blocking portion, J1: first blocking portion, J2: second blocking portion
S1: first stopper, S2: second stopper
E: mesh member

## Claims

1. A battery pack comprising:
a plurality of battery modules (100) each comprising one or more battery cells (110) to store and release energy, each battery module (100) further comprising an intake portion (I1) and an exhaust portion (O1);
an intake duct (200) comprising an intake channel (C1) and communicating with the intake portion (I1) of each of the plurality of battery modules (100); and
an exhaust duct (300) comprising an exhaust channel (C2) and communicating with the exhaust portion (O1) of each of the plurality of battery modules (100),
wherein each of the plurality of battery modules (100) further comprises an opening/closing member (150) configured to close the intake portion (I1) when internal pressure increases,
wherein the exhaust duct (300) comprises a plurality of inlets (F) formed to respectively correspond to the exhaust portions (O1) of the plurality of battery modules (100) and a plurality of blocking portions (J) configured to open or close each of the plurality of inlets (F) and to block gas introduced into at least one of the plurality of inlets (F) from being introduced into other inlets (F).

2. The battery pack according to claim 1, wherein the intake portion (I1) is formed on a side surface of each of the plurality of battery modules (100), and the exhaust portion (O1) is formed on a top surface of each of the plurality of battery modules (100).

3. The battery pack according to claim 1, wherein the intake duct (200) covers a bus bar assembly (130) of each of the plurality of battery modules (100).

4. The battery pack according to claim 1, wherein the intake duct (200) is configured to supply a cooling fluid to the plurality of battery modules (100), and the exhaust duct (300) is configured to discharge the cooling fluid supplied to the plurality of battery modules (100) to an outside.

5. The battery pack according to claim 4, wherein the opening/closing member (150) is configured to, when the cooling fluid is supplied through the intake duct (200), open the intake portion (I1).

6. The battery pack according to claim 1, wherein the opening/closing member (150) is configured to, when venting gas is generated in a battery module (100), close the intake portion (11).

7. The battery pack according to claim 1, wherein the opening/closing member (150) is pivotable around a hinge (G) to open or close the intake portion (I1).

8. An energy storage system comprising the battery pack according to any one of claims 1 to 7.

9. A vehicle comprising the battery pack according to any one of claims 1 to 7.

## Patentansprüche

1. Batteriepack, umfassend:
eine Mehrzahl von Batteriemodulen (100), welche jeweils eine oder mehrere Batteriezellen (110) umfassen, um Energie zu speichern und freizugeben, wobei jedes Batteriemodul (100) ferner einen Einlassabschnitt (11) und einen Auslassabschnitt (O1) umfasst;
einen Einlassschacht (200), welcher einen Einlasskanal (C1) umfasst und mit dem Einlassabschnitt (I1) jedes der Mehrzahl von Batteriemodulen (100) in Verbindung steht; und
einen Auslassschacht (300), welcher einen Auslasskanal (C2) umfasst und mit dem Auslassabschnitt (O1) jedes der Mehrzahl von Batteriemodulen (100) in Verbindung steht,
wobei jedes der Mehrzahl von Batteriemodulen (100) ferner ein Öffnungs-/Schließelement (150) umfasst, welches dazu eingerichtet ist, den Einlassabschnitt (11) zu schließen, wenn ein Innendruck ansteigt,
wobei der Auslassschacht (300) eine Mehrzahl von Einlässen (F), welche derart gebildet sind, dass sie jeweils den Auslassabschnitten (O1) der Mehrzahl von Batteriemodulen (100) entsprechen, und eine Mehrzahl von Sperrabschnitten (J) umfasst, welche dazu eingerichtet sind, jeden der Mehrzahl von Einlässen (F) zu öffnen oder zu schließen und zu verhindern, dass in wenigstens einen der Mehrzahl von Einlässen (F) eingeleitetes Gas in andere Einlässe (F) eingeleitet wird.

2. Batteriepack nach Anspruch 1, wobei der Einlassabschnitt (11) an einer Seitenfläche jedes der Mehrzahl von Batteriemodulen (100) gebildet ist und der Auslassabschnitt (O1) an einer oberen Fläche jedes der Mehrzahl von Batteriemodulen (100) gebildet ist.

3. Batteriepack nach Anspruch 1, wobei der Einlassschacht (200) eine Sammelschienenanordnung (130) jedes der Mehrzahl von Batteriemodulen (100) abdeckt.

4. Batteriepack nach Anspruch 1, wobei der Einlassschacht (200) dazu eingerichtet ist, der Mehrzahl von Batteriemodulen (100) ein Kühlfluid zuzuführen, und der Auslassschacht (300) dazu eingerichtet ist, das der Mehrzahl von Batteriemodulen (100) zugeführte Kühlfluid zu einem Äußerem abzuführen.

5. Batteriepack nach Anspruch 4, wobei das Öffnungs-/Schließelement (150) dazu eingerichtet ist, wenn das Kühlfluid durch den Einlassschacht (200) zugeführt wird, den Einlassabschnitt (11) zu öffnen.

6. Batteriepack nach Anspruch 1, wobei das Öffnungs-/Schließelement (150) dazu eingerichtet ist, wenn Entlüftungsgas in einem Batteriemodul (100) erzeugt wird, den Einlassabschnitt (11) zu schließen.

7. Batteriepack nach Anspruch 1, wobei das Öffnungs-/Schließelement (150) um ein Scharnier (G) schwenkbar ist, um den Einlassabschnitt (11) zu öffnen oder zu schließen.

8. Energiespeichersystem, umfassend den Batteriepack nach einem der Ansprüche 1 bis 7.

9. Fahrzeug, umfassend den Batteriepack nach einem der Ansprüche 1 bis 7.

## Revendications

1. Bloc-batterie comprenant :
une pluralité de modules de batterie (100) comprenant chacun une ou plusieurs cellules de batterie (110) pour stocker et libérer de l'énergie, chaque module de batterie (100) comprenant en outre une portion d'admission (11) et une portion d'échappement (O1) ;
un conduit d'admission (200) comprenant un canal d'admission (C1) et communiquant avec la portion d'admission (11) de chacun de la pluralité de modules de batterie (100) ; et
un conduit d'échappement (300) comprenant un canal d'échappement (C2) et communiquant avec la portion d'échappement (O1) de chacun de la pluralité de modules de batterie (100),
dans lequel chacun de la pluralité de modules de batterie (100) comprend en outre un organe d'ouverture/fermeture (150) configuré pour fermer la portion d'admission (11) lorsque la pression interne augmente,
dans lequel le conduit d'échappement (300) comprend une pluralité d'entrées (F) formées pour correspondre respectivement aux portions d'échappement (O1) de la pluralité de modules de batterie (100) et une pluralité de portions de blocage (J) configurées pour ouvrir ou fermer chacune de la pluralité d'entrées (F) et pour bloquer l'introduction de gaz introduit dans au moins l'une de la pluralité d'entrées (F) dans d'autres entrées (F).

2. Bloc-batterie selon la revendication 1, dans lequel la portion d'admission (11) est formée sur une surface latérale de chacun de la pluralité de modules de batterie (100), et la portion d'échappement (O1) est formée sur une surface supérieure de chacun de la pluralité de modules de batterie (100).

3. Bloc-batterie selon la revendication 1, dans lequel le conduit d'admission (200) recouvre un ensemble barre omnibus (130) de chacun de la pluralité de modules de batterie (100).

4. Bloc-batterie selon la revendication 1, dans lequel le conduit d'admission (200) est configuré pour fournir un fluide de refroidissement à la pluralité de modules de batterie (100), et le conduit d'échappement (300) est configuré pour évacuer le fluide de refroidissement fourni à la pluralité de modules de batterie (100) vers un extérieur.

5. Bloc-batterie selon la revendication 4, dans lequel l'organe d'ouverture/fermeture (150) est configuré pour, lorsque le fluide de refroidissement est fourni à travers le conduit d'admission (200), ouvrir la portion d'admission (11).

6. Bloc-batterie selon la revendication 1, dans lequel l'organe d'ouverture/fermeture (150) est configuré pour, lorsque du gaz d'évent est généré dans un module de batterie (100), fermer la portion d'admission (11).

7. Bloc-batterie selon la revendication 1, dans lequel l'organe d'ouverture/fermeture (150) est pivotant autour d'une charnière (G) pour ouvrir ou fermer la portion d'admission (11).

8. Système de stockage d'énergie comprenant le bloc-batterie selon l'une quelconque des revendications 1 à 7.

9. Véhicule comprenant le bloc-batterie selon l'une quelconque des revendications 1 à 7.
